Europäisches Patentamt

European Patent Office

Office européen des brevets

(19)

(11) Veröffentlichungsnummer· **0 018 651**

**A1**

(12)

# EUROPÄISCHE PATENTANMELDUNG

(21) Anmeldenummer: 80102395.3

(22) Anmeldetag: 02.05.80

(51) Int. Cl.³: **G 02 C 5/12**

(30) Priorität: 04.05.79 DE 2917973

(43) Veröffentlichungstag der Anmeldung:
12.11.80 Patentblatt 80/23

(84) Benannte Vertragsstaaten:
AT DE FR GB IT

(71) Anmelder: Frey & Winkler GmbH & Co. KG.
Museumstrasse 6
D-7530 Pforzheim(DE)

(72) Erfinder: Winkler, Emil
Landhausstrasse 19
D-7536 Ispringen(DE)

(72) Erfinder: Greger, Werner
Wagnerstrasse 28
D-7535 Königsbach-Stein(DE)

(74) Vertreter: Mayer, Friedrich, Dr. et al,
Patentanwälte Dr. F. Mayer Dipl.-Phys. G. Frank
Westliche 24
D-7530 Pforzheim(DE)

(54) Seitensteg für Brillenfassungen.

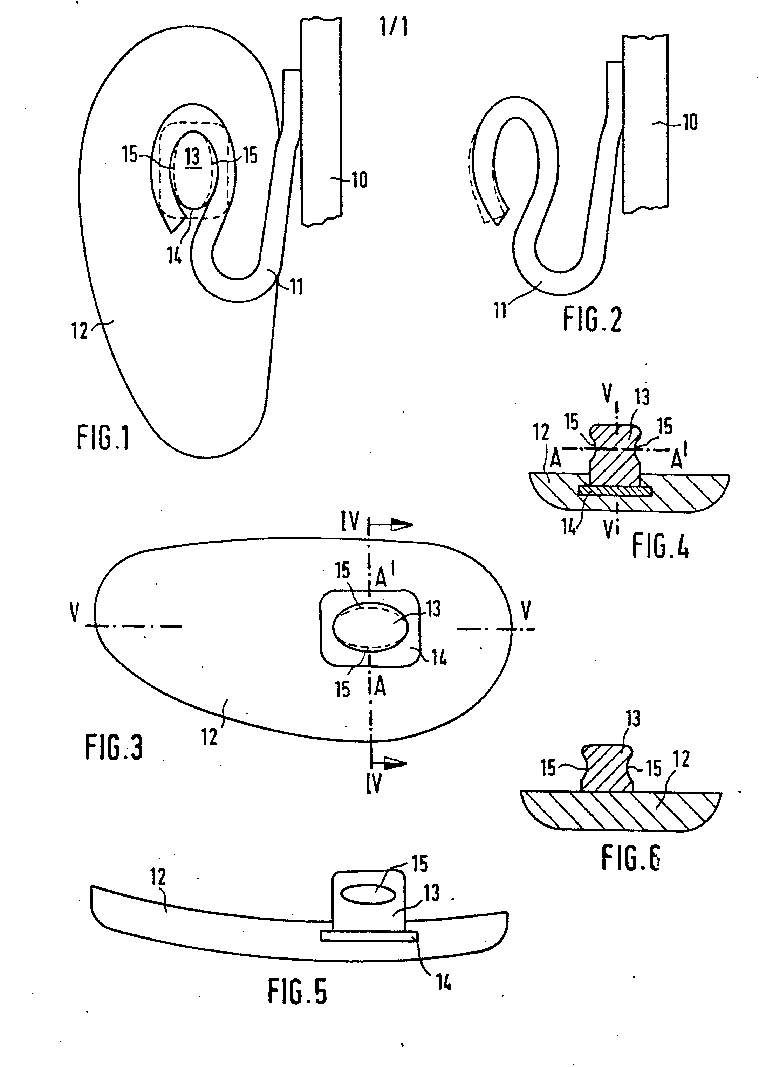

(57) Ein Seitensteg für Brillenfassungen besteht aus einem Stegarm (11), der derart abgebogen ist, daß er elastisch federnd in Nuten (15) ein Formstück (13) umfaßt, das in das Stegplättchen (12) (Pad) eingelassen ist. Damit ist eine einfache Montage und Demontage möglich. Die Nuten (15) können so ausgebildet sein, daß die gewünschte Beweglichkeit des Formstückes (13) in Stegarm (11) erreicht wird (Fig. 1).

FIG.1

EP 0 018 651 A1

Frey & Winkler GmbH & Co KG

<u>Seitensteg für Brillenfassungen</u>

Die Erfindung betrifft einen Seitensteg für Brillenfassungen, bei dem zur Herstellung einer beweglichen
Verbindung eines Stegplättchens mit dem Brillenrand
ein Teil des Stegarms ein im Stegplättchen befindliches Formstück längs einer Vertiefung umgreift.

Ein derartiger Seitensteg ist aus der US-PS 2 176 368
bekannt. Dort ist der Stegarm in seinem unteren Teil
in quadratischer Form so zurückgebogen, daß ein geschlossenes Viereck entsteht, das das Formstück allseitig umgreift. Damit das Formstück nicht aus der
viereckigen Öffnung herausfällt, weist es oben einen
umlaufenden Anschlag auf, der entferntwerden kann, um
das Stegplättchen (Pad) aus dem Stegarm zu lösen.

Es ist jedoch nicht möglich, ohne Aufbiegen entweder
des kopfartigen, umlaufenden Anschlages oder des unteren
Teils des Stegarms das Formstück wieder aus der Umfassung des Stegarms zu lösen.

Dem gegenüber ist die Aufgabe der Erfindung, eine bewegliche Verbindung der gattungsgemäßen Art zu schaffen,
die ein federndes Ein- und Ausrasten des Formstückes in
den Stegarm ohne Änderung oder Entfernung von Teilen
oder Benutzung von Werkzeugen ermöglicht.

Dies erreicht die Erfindung dadurch, daß der das Formstück umgreifende Teil des Stegarms zumindest teilweise eine elliptische Form hat, daß die Vertiefung aus zwei an den Längsseiten des Formstückes gegenüberliegenden Nuten besteht, daß der Querschnitt des Formstückes in Höhe der Nuten im wesentlichen auf die Krümmung des umgreifenden Teils des Stegarms angepaßt ist, und daß der Durchmesser des aus einem Metall oder einer Metall-Legierung bestehenden Stegarms ca. 1 mm betragt, so daß das Formstück in den Stegarm federnd ein- und ausrastbar ist.

Durch diese Lösung wird die konstruktive Einfachheit das Gegenstandes der US-PS 2,176, 368 in vorteilhafter Weise ergänzt und weitergeführt, nunmehr ist es möglich, die Stegplättchen oder Pads problemlos auszutauschen, wie dies beim Anpassen der Stegplättchen oder auch im Laufe des jahrelangen Gebrauches mehr oder weniger häufig erforderlich ist.

Weitere Ausgestaltungen des Erfindungsgedankens sind den Unteransprüchen zu entnehmen.

Die Erfindung wird nun anhand eines Ausführungsbeispieles näher erläutert.

Es zeigen:

Fig. 1    eine Aufsicht auf den erfindungsgemäßen Seitensteg, wobei die beiden Gelenkteile, Stegarme und Formstück, ineinander eingerastet sind,

Fig. 2    eine Darstellung des einen Gelenkteiles des Stegarms allein,

Fig. 3    eine Aufsicht auf das Stegplättchen mit dem Formstück, dem zweiten Gelenkteil,

Fig. 4    einen Querschnitt durch das Stegplättchen
          gemäß Fig. 3, entlang der Linie IV-IV,

Fig. 5    einen Längsschnitt durch das Stegplättchen,
          wobei das Formstück als Einlage im Stegplättchen befestigt ist,

Fig. 6    einen Querschnitt gemäß Fig. 4 mit einstückigem Stegplättchen/ Formstück.

Figur 1 zeigt in der Aufsicht (parallel zum Brillenrahmen 10) einen Stegarm 11, der mit einem Formstück
13 innerhalb eines Stegplättchens 12 zusammenwirkt.
Zu diesem Zweck ist der Stegarm 11 zweimal in entgegengesetzter Richtung um ungefähr 180° abgebogen, so daß
sich eine S-förmige Gestalt ergibt. Die zweite Hälfte
dieser S-Form umschließt dabei das Formstück 13, indem
es in zwei dort länglich eingeformte Nuten 15 eingreift.
Das Formstück 13 ist seinerseits über einen Boden 14
im Stegplättchen 12 verankert.

Der Stegarm 11 ist in seinem Material und in seinem
Durchmesser derart gewählt, daß zumindest dasjenige
Teil, das das Formstück 13 umschließen soll, soweit
federnd ausgebildet ist (Fig. 2), daß ein Einführen
und Einrasten des Formstückes 13 in den Stegarm 11
möglich ist. Im Ausführungsbeispiel ist für den Stegarm 11 als Material eine an sich bekannte Be-Cu-Legierung
gewählt, wobei der Durchmesser des Stegarmes bei 1mm
liegt. Diese Kombination von Material und Durchmesser
ergibt die erwünschte Federungseingeschaft bei gleichzeitig guter mechanischer Stabilität. Der Stegarm
11 ist in bekannter Weise am Brillenrahmen 10 fest
angebracht.

Die Figuren 3 bis 6 zeigen eine Aufsicht (Fig. 3) bzw.
Schnitte (Figuren 4 - 6), durch das Stegplättchen 12
mit dem Formstück 13. Der Querschnitt des Formstückes 13 in der Ebene des Stegplättchens ist elliptisch, wobei an den Seitenflächen mit geringerer Krümmung die beiden Nuten 15 eingebracht sind. Die Verbindungslinie A-A' zwischen den beiden Mitten der beiden Nuten 15 bildet ungefähr die Drehachse des Stegplättchens 12 gegenüber dem Stegarm 11.

Das Formstück 13 ist in an sich bekannter Weise mittels einer Platte 14 im Stegplättchen 12 verankert. Es ist jedoch auch möglich (Fig. 6), das Stegplättchen 12 und das Formstück 13 einstückig aus geeignetem Kunststoff herzustellen, wodurch sich eine weitere Vereinfachung und Verbilligung der Herstellung des Seitenstegs ergibt.

Die Form der Nuten 15 ist derart gewählt, daß die geforderte Schwenkbarkeit erreicht wird. Dies heißt einerseits, daß an den Stellen der Nut die Krümmung des Ellipsoides geringer ist als an den übrigen Stellen und im wesentlichen der Krümmung des Stegarms 11 in dessen eingefedertem Zustand entspricht. Der Stegarm 11 sitzt daher im Bereich der Verbindungslinie A-A' am festesten in den beiden Nuten 15. Die Verbindungslinie A-A' bildet daher eine quasi-Drehachse, obwohl hier auf Elemente verzichtet wurde, die eine Drehachse exakt definieren, wie z.B. Achszapfen und Lagerbohrungen.

In den äußeren Bereichen der Nuten 15 wird der Stegarm 11 weniger kräftig umfaßt und läßt dort Spielraum für die Drehbewegung des Stegplättchens 12. Der Grad der Beweglichkeit des Stegplättchens 12 hängt im einzelnen natürlich von der Form des Formstückes 13, der Nuten 15 und der Form des Stegarmes 11 ab. So ist es beispielsweise denkbar, die Seitenbereiche der Nuten 15 zu verbreitern, um einen noch größeren Schwenkwinkel zu erreichen.

Die Erfindung ermöglicht also auf überraschend einfache Weise die Herstellung einer einrastbaren, schwenkbaren Verbindung zwischen einem Stegplättchen und dem Brillenrahmen, welche aufgrund ihrer Federung das jederzeitige Herausnehmen bzw. Austauschen des Stegplättchens zuläßt. Besonders von Bedeutung ist, daß hierbei der Stegarm selbst ein Teil des Gelenkorganes bildet. Wenn das Formstück einstückig mit dem Stegplättchen hergestellt ist, läßt sich eine weitere Vereinfachung dieser Konstruktion nicht mehr durchführen. Dieser Seitensteg hat für den Benutzer die gleichen Vorteile wie z.B. der Seitensteg gemäß der DE-AS 24 49 349, ist jedoch in Fabrikation und Gebrauch wesentlich unkomplizierter und daher auch kostengünstiger.

Es ist abweichend vom oben dargestellten Ausführungsbeispiel natürlich auch möglich, den Stegarm 11 derart fest in den Nuten 15 zu verankern, daß eine Schwenkbewegung praktisch nicht mehr möglich ist. Es handelt sich dann lediglich um eine einrastende, starre Verbindung des Stegarmes 11 mit dem Stegplättchen 12, die für manche Anwendungsbereiche ausreicht.

Es ist daher auch als Vorteil der Erfindung zu sehen, daß mit identischen Bauelementen ein Spektrum von Gelenkorganen hergestellt werden kann, deren Gelenkigkeit von starr bis nahezu beliebig beweglich reichen kann.

- 1 -

<u>Patentansprüche:</u>

1. Seitensteg für Brillenfassungen, bei dem zur Herstellung einer beweglichen Verbindung eines Stegplättchens (12) mit dem Brillenrand (10) ein Teil des Stegarms (11) ein im Stegplättchen (12) befindliches Formstück (13) längs einer Vertiefung umgreift, dadurch gekennzeichnet, daß der das Formstück (13) umgreifende Teil des Stegarms (11) zumindest teilweise eine elliptische Form hat, daß die Vertiefung aus zwei an den Längsseiten des Formstückes (13) gegenüberliegenden Nuten (15) besteht, daß der Querschnitt des Formstückes (13) in Höhe der Nuten (15) im wesentlichen auf die Krümmung des umgreifenden Teils des Stegarms (11) angepaßt ist, und daß der Durchmesser des aus einem Metall oder einer Metallegierung bestehenden Stegarms (11) ca. 1mm beträgt, so daß das Formstück (13) in den Stegarm (11) federnd ein- und ausrastbar ist.

2. Seitensteg nach Patentanspruch 1, dadurch gekennzeichnet, daß die Metallegierung eine Beryllium-Bronze-Legierung ist.

3. Seitensteg nach Patentanspruch 1, dadurch gekennzeichnet, daß das Formstück (13) und das Stegplättchen (12) einstückig hergestellt sind.

4. Seitensteg nach Patentanspruch 1, dadurch gekennzeichnet, daß der Verlauf des Querschnittes der Nuten (15) derart ausgebildet ist, daß die zentrale, senkrechte Verbindungslinie (A - A') eine Drehachse des Formstückes (13) gegenüber dem Stegarm (11) bildet.

FIG.1

FIG.2

FIG.3

FIG.4

FIG.5

FIG.6

0018651

Europäisches Patentamt

**EUROPÄISCHER RECHERCHENBERICHT**

Nummer der Anmeldung
EP 80 10 2395

| | **EINSCHLÄGIGE DOKUMENTE** | | KLASSIFIKATION DER ANMELDUNG (Int Cl ) |
|---|---|---|---|
| Kategorie | Kennzeichnung des Dokuments mit Angabe. soweit erforderlich. der maßgeblichen Teile | betrifft Anspruch | |
| | <u>DE - A - 2 558 122</u> (OTTO LAIB KG)<br><br>* Seite 5, Zeile 24 – Seite 7, Zeile 11 *<br><br>-- | 1 | G 02 C 5/12 |
| P | <u>DE - A - 2 835 116</u> (FA. FERDINAND MENRAD)<br><br>* Seite 1, Zeilen 1-13 *<br><br>-- | 1 | |
| D,A | <u>US - A - 2 176 368</u> (JAMES A. SWEENEY)<br><br>---- | | |

RECHERCHIERTE SACHGEBIETE (Int. Cl. 3)

G 02 C 5/12

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie. übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 29-07-1980 | TREVETIN |

EPA form 1503.1   06.78